# EUROPEAN PATENT SPECIFICATION

(11) **EP 4 245 572 B1**
(45) Date of publication and mention of the grant of the patent: **16.04.2025**
(21) Application number: 23157461.7
(22) Date of filing: 20.02.2023
(51) Int. Cl.: B60C 11/03, B60C 11/13

(54) **TIRE**
REIFEN
PNEUMATIQUE

(30) Priority: 14.03.2022 JP 2022039481
(43) Date of publication of application: 20.09.2023
(73) Proprietor: Sumitomo Rubber Industries, Ltd., Kobe-shi, Hyogo 651-0072 (JP)
(72) Inventor: MIURA, Ryo, Kobe-shi, 651-0072 (JP); NAKAJIMA, Sho, Kobe-shi, 651-0072 (JP); SANAE, Ryuhei, Kobe-shi, 651-0072 (JP); ABE, Shotaro, Kobe-shi, 651-0072 (JP)
(74) Representative: Manitz Finsterwald Patent- und Rechtsanwaltspartnerschaft mbB

(56) References cited:
- EP-A1- 2 311 661
- WO-A1-2021/089962
- WO-A1-2021/089964
- WO-A1-2021/191551

## Description

### BACKGROUND OF THE INVENTION

### Field of the Invention

The present invention relates to a tire.

### Background Art

Japanese Laid-Open Patent Publication No. 2019-156025 proposes a tire provided with a tread portion having a plurality of inclined grooves extending obliquely from a first tread end on one side of the tread portion in the tire axial direction to a tire equator side.

The tire provided with the inclined grooves as in Japanese Laid-Open Patent Publication No. 2019-156025 has been required to further improve cornering performance. Meanwhile, recent vehicles have been significantly becoming quieter, and the tires have been required to maintain noise performance.

The present invention has been made in view of the above circumstances, and a main object of the present invention is to provide a tire having improved cornering performance while maintaining noise performance.

Known all-season tires are disclosed in WO 2021/089964 Al and in WO 2021/089962 Al.

### SUMMARY OF THE INVENTION

The present invention is directed to a tire according to claim 1.

As a result of adopting the above-described configuration, the tire according to the present invention can improve the cornering performance while maintaining the noise performance.

### BRIEF DESCRIPTION OF THE DRAWINGS

FIG. 1 is a development of a tread portion of a tire according to one embodiment of the present invention;
FIG. 2 is an enlarged view of first inclined grooves and a first land portion in FIG. 1;
FIG. 3 is a cross-sectional view taken along a line A-A in FIG. 2;
FIG. 4 is an enlarged cross-sectional view showing a state when a conventional inclined groove is in contact with the ground; and
FIG. 5 is an enlarged view of a first chamfered portion and a second chamfered portion in FIG. 3.

### DETAILED DESCRIPTION

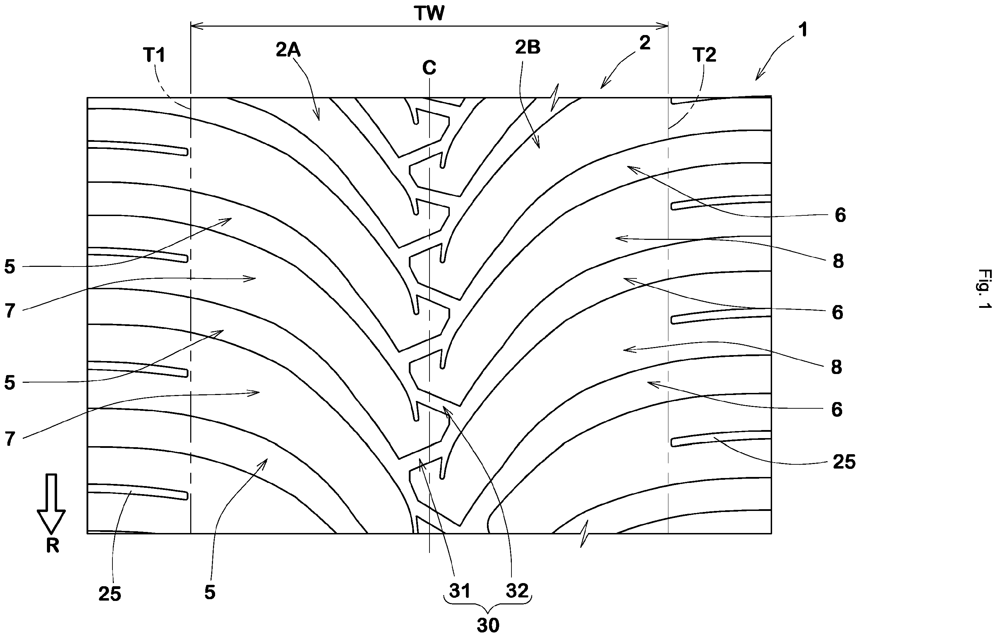

Hereinafter, an embodiment of the present invention will be described with reference to the drawings. FIG. 1 is a development of a tread portion 2 of a tire 1 according to the present embodiment (hereinafter, sometimes simply referred to as "tire"). As shown in FIG. 1, the tire 1 of the present embodiment is, for example, preferably a tire for a passenger car. However, the tire 1 of the present invention is not limited to thereto, and may be a heavy duty tire, for example.

The tire 1 of the present invention includes a tread portion 2 having a designated rotation direction R. The rotation direction R is indicated, for example, on each sidewall portion (not shown) by characters or marks.

The tread portion 2 of the tire 1 according to the present embodiment includes a first tread end T1 and a second tread end T2. In each drawing of the present application, a tread end on the left side of a tire equator C is referred to as first tread end T1, and a tread end on the right side of the tire equator C is referred to as second tread end T2. The tread portion 2 includes a first tread portion 2A on the first tread end T1 side with respect to the tire equator C and a second tread portion 2B on the second tread end T2 side with respect to the tire equator C. The first tread portion 2A and the second tread portion 2B are substantially line-symmetric with respect to the tire equator C except that the first tread portion 2A and the second tread portion 2B are displaced in the tire circumferential direction. Accordingly, each configuration of the first tread portion 2A can be applied to the second tread portion 2B.

The first tread end T1 and the second tread end T2 each indicate an outermost ground contact position in the tire axial direction in the case where 60% of a standardized load is applied to the tire 1 in a standardized state and the tire 1 is in contact with a flat plane at a camber angle of 0°.

The "standardized state" represents a state in which a tire is fitted on a standardized rim and is inflated to a standardized internal pressure and no load is applied to the tire when the tire is a pneumatic tire for which various standards are defined. For nonpneumatic tires and tires for which various standards are not defined, the standardized state represents a standard use state, corresponding to a purpose of use of the tire, in which no load is applied to the tire. In the present application, unless otherwise specified, the dimensions of the components of the tire and the like are represented by values measured in the standardized state. In the present application, unless otherwise specified, a known method can be used as a method for measuring the dimensions or compositions of material.

The "standardized rim" represents a rim that is defined by a standard for each tire, in a standard system including the standard on which the tire is based, and is, for example, "standard rim" in the JATMA standard, "Design Rim" in the TRA standard, or "Measuring Rim" in the ETRTO standard.

The "standardized internal pressure" represents an air pressure that is defined by a standard for each tire, in a standard system including the standard on which the tire is based, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The "standardized load" represents a load that is defined by a standard for each tire, in a standard system including the standard on which the tire is based, for pneumatic tires for which various standards are defined, and is "maximum load capacity" in the JATMA standard, the maximum value recited in the table "TIRE LOAD LIMITS AT VARIOUS COLD INFLATION PRESSURES" in the TRA standard, or "LOAD CAPACITY" in the ETRTO standard. For tires for which various standards are not defined, the "standardized load" refers to the maximum load applicable when the tire is used, according to the above-described standards.

The tread portion 2 includes a plurality of first inclined grooves 5. The first inclined grooves 5 extend at least from the first tread end T1 toward the tire equator C side so as to be inclined to a leading edge side (the lower side in each drawing of the present application) in the rotation direction R. The first inclined grooves 5 of the present embodiment terminate before reaching the tire equator C. For example, the first inclined grooves 5 may each cross the tire equator C. In addition, the tread portion 2 includes a plurality of first land portions 7 demarcated by the first inclined grooves 5.

The tread portion 2 of the present embodiment includes a plurality of second inclined grooves 6 and a plurality of second land portions 8. The second inclined grooves 6 extend at least from the second tread end T2 toward the tire equator C side so as to be inclined to the leading edge side. The second land portions 8 are demarcated by the second inclined grooves 6. The second inclined grooves 6 have substantially the same configurations as the first inclined grooves 5, and the configurations of the first inclined grooves 5 can be applied to the second inclined grooves 6. In addition, the second land portions 8 have substantially the same configurations as the first land portions 7, and the configurations of the first land portions 7 can be applied to the second land portions 8.

Each of the first inclined grooves 5 and the second inclined grooves 6 has a groove width of, for example, 2 to 12 mm. In a preferable mode, each of the first inclined grooves 5 and the second inclined grooves 6 has the groove width reduced from the first tread end T1 side or the second tread end T2 side toward the tire equator C side. In addition, each of the first inclined grooves 5 and the second inclined grooves 6 has a depth of, for example, 5 to 15 mm. However, each dimension of the first inclined grooves 5 and the second inclined grooves 6 is not limited thereto.

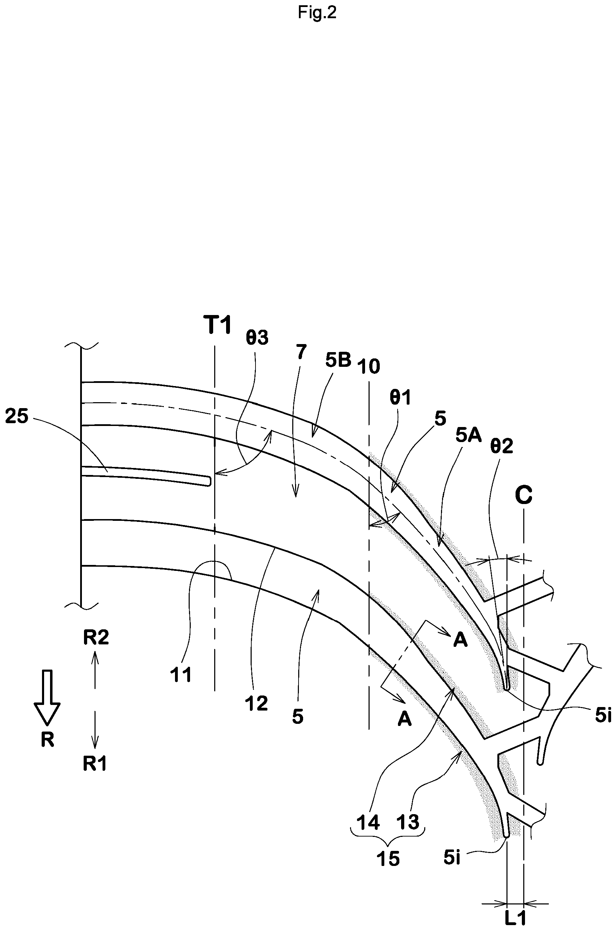

FIG. 2 is an enlarged view of two first inclined grooves 5 and one first land portion 7. As shown in FIG. 2, an inner end 5i of each of the plurality of first inclined grooves 5 in the tire axial direction is located on the tire equator C side with respect to a first middle position 10. The first middle position 10 is a center position between the first tread end T1 and the tire equator C in the tread portion 2 in the tire axial direction.

In the present invention, in each of the plurality of first inclined grooves 5, an angle θ2 relative to the tire circumferential direction at the inner end 5i is smaller than an angle θ1 relative to the tire circumferential direction at the first middle position 10.

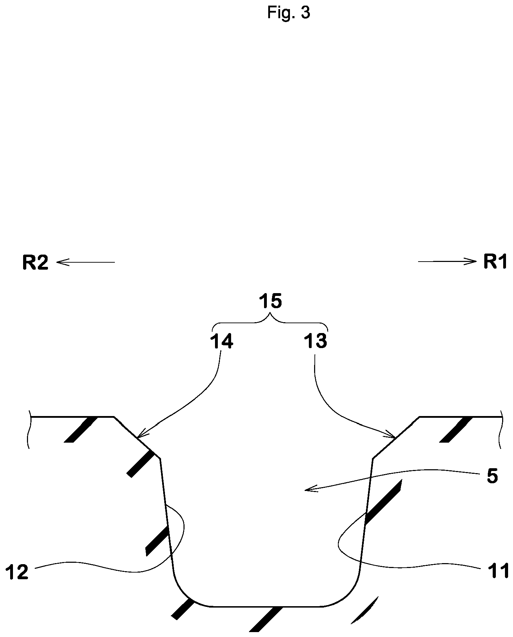

FIG. 3 is a cross-sectional view taken along a line A-A in FIG. 2, as a diagram showing a cross-section of each first inclined groove 5. As shown in FIG. 2 and FIG. 3, in the present invention, each of the plurality of first inclined grooves 5 includes a first groove wall 11 on a leading edge side R1 in the rotation direction R and a second groove wall 12 on a trailing edge side R2 in the rotation direction R. In each of the plurality of first inclined grooves 5, the second groove wall 12 includes a chamfered portion 15 in an inner region 5A on the inner end 5i side with respect to the first middle position 10. In the present embodiment, a chamfered portion 15 is also formed on the first groove wall 11. Hereinafter, the chamfered portion 15 formed on the first groove wall 11 is sometimes referred to as first chamfered portion 13, and the chamfered portion 15 formed on the second groove wall 12 is sometimes referred to as second chamfered portion 14. In FIG. 1, the chamfered portions 15 are omitted. In FIG. 2, the chamfered portions 15 are conceptually shown by dots for easy understanding.

In the present invention, in the cross-section orthogonal to a groove center line of the first inclined groove 5, a chamfered area of the chamfered portion 15 provided at least in the second groove wall 12 increases toward the inner end 5i side. As a result of adopting the above-described configuration, the tire 1 of the present invention can improve the cornering performance while maintaining the noise performance. The mechanism is as follows.

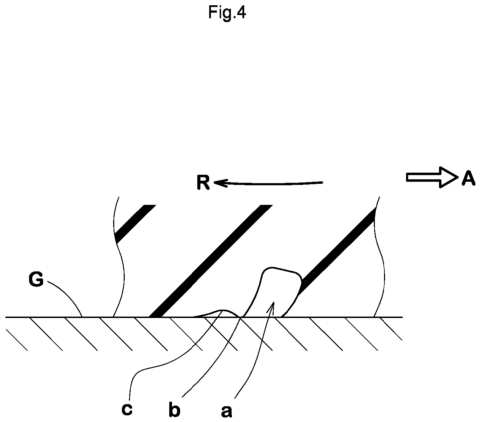

FIG. 4 is an enlarged cross-sectional view showing a state when a conventional inclined groove a in which no chamfered portion is provided is in contact with the ground. FIG. 4 shows a state during braking, and an arrow R represents the rotation direction of the tire and an arrow A represents the traveling direction of the tire. As shown in FIG. 4, generally, when a great shearing force acts on the inclined groove a in which no chamfered portion is provided, an edge b on a leading edge side of the inclined groove a (synonym for an end on a trailing edge side of a tread surface of a land portion) is drawn in under the tread surface of the land portion, a land portion surface c in the vicinity of the edge b locally rises from the road surface, and thus grip cannot be sufficiently exhibited in some cases.

In a groove having a relatively small angle relative to the tire circumferential direction, such as the inner region 5A of the first inclined groove 5 of the present invention, the above-described issue is caused also during cornering. That is, when the groove such as the inner region 5A of the present invention is provided with no chamfered portion, an edge on the outer side of cornering of the land portion is drawn in under the tread surface of the land portion, for example, during sharp cornering, the land portion in the vicinity of the edge locally rises from the road surface, and thus grip cannot be sufficiently exhibited in some cases. In order to address such a problem, in the present invention, at least the second groove wall 12 of the inner region 5A includes the chamfered portion 15 as shown in FIG. 2 and FIG. 3, and the chamfered area of this chamfered portion 15 increases toward the inner end 5i side of the first inclined groove 5. Accordingly, the above-described issue is prevented, grip during cornering is enhanced, and excellent cornering performance can be exhibited.

In a conventional tire, the groove provided with a chamfered portion has the increased groove volume, thereby impairing the noise performance in some cases. However, the chamfered area on the first middle position side is relatively small in the present invention. Thus, noise can be restrained from being increased due to the increased groove volume in the chamfered portion, and the noise performance can be maintained. Owing to such a mechanism, the tire 1 of the present invention can improve the cornering performance while maintaining the noise performance.

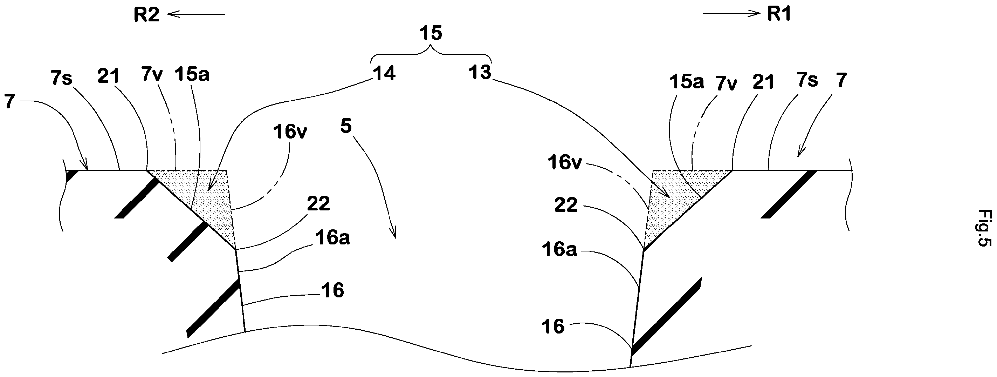

FIG. 5 shows an enlarged view of the first chamfered portion 13 and the second chamfered portion 14. The chamfered portions 15 each include a flat surface or a curved surface (hereinafter, both are sometimes collectively referred to as inclined surface) that is inclined so as to connect a main body 16a of the groove wall 16 and a tread surface 7s of the first land portion 7 such that a pointed corner portion is not formed by the groove wall 16 of the first inclined groove 5 and the tread surface 7s.

The chamfered area of each chamfered portion 15 is defined as described below. That is, the chamfered area refers to the area of a region surrounded by an inclined surface 15a of the chamfered portion 15, a virtual tread surface 7v obtained by extending the tread surface 7s of the first land portion 7 in the groove width direction of the first inclined groove 5, and a virtual groove wall 16v obtained by extending the main body 16a of the groove wall 16 of the first inclined groove 5 to the virtual tread surface 7v.

The inclined surface 15a of each chamfered portion 15 refers to a surface from the main body 16a of the groove wall 16 to the tread surface 7s of the first land portion 7. An end of the outer surface of the first land portion 7 that comes into contact with the flat plane, when 60% of the standardized load is applied to the tire 1 in the standardized state and the tire 1 is brought into contact with a flat plane at a camber angle of 0°, is a boundary 21 between the inclined surface 15a and the tread surface 7s. The virtual tread surface 7v is a virtual surface obtained by extending the tread surface 7s from the boundary in the groove width direction. When the tread surface is curved, the virtual tread surface 7v corresponds to a curved line that extends from the boundary while maintaining the curvature of the tread surface 7s in a cross-section of the first inclined groove 5.

The virtual groove wall 16v is a virtual surface obtained by extending the main body 16a from a boundary 22 between the main body 16a of the groove wall 16 and the inclined surface 15a to the virtual tread surface 7v. The boundary 22 between the main body 16a of the groove wall 16 and the inclined surface 15a is a position where an angle of the groove wall 16 relative to the tire radial direction is abruptly changed. When the position is an area having a substantial width, the position closest to the groove center line corresponds to the boundary 22.

Hereinafter, the present embodiment will be described in more detail. The configurations described below represent specific modes of the present embodiment. Therefore, needless to say, even when the configurations described below are not provided, the present invention can exhibit the above-described effects. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

As shown in FIG. 2, an angle of each first inclined groove 5 relative to the tire circumferential direction preferably increases toward the outer side in the tire axial direction.

In a preferable mode, the angle continuously increases toward the outer side in the tire axial direction. Accordingly, each first inclined groove 5 extends so as to be curved. Specifically, the angle θ2 of each first inclined groove 5 relative to the tire circumferential direction at the inner end 5i on the tire equator C side of the first inclined groove 5 is, for example, not less than 5°, and preferably 5 to 30°. The angle θ1 of each first inclined groove 5 relative to the tire circumferential direction at the first middle position 10 is, for example, not less than 30° and preferably 30 to 60°. An angle θ3 of each first inclined groove 5 relative to the tire circumferential direction at the first tread end T1 is preferably 80 to 90°. Accordingly, the braking performance and the cornering performance are also improved in a well-balanced manner.

In each first inclined groove 5, a distance L1 in the tire axial direction from the inner end 5i on the tire equator C side to the tire equator C is, for example, not greater than 10% of a tread width TW (shown in FIG. 1) and preferably not greater than 5% thereof. The tread width TW corresponds to a distance in the tire axial direction from the first tread end T1 to the second tread end T2 in the standardized state. In addition, the first inclined grooves 5 extend beyond the first tread end T1. Accordingly, excellent wet performance can be obtained.

In the present invention, as long as the second chamfered portion 14 is disposed on a part of each inner region 5A, the above-described effect can be expected to a certain degree. However, from the viewpoint of more reliably exhibiting the above-described effect, the second chamfered portion 14 is preferably provided in the inner region 5A in a range of not less than 50% of an entire length thereof and more preferably in the inner region 5A over the entire length thereof.

As shown in FIG. 5, in the present embodiment, the tread surfaces 7s of the first land portions 7, the groove walls 16 of the first inclined groove 5, and the inclined surfaces 15a of the chamfered portions 15 are each substantially formed planar, and formed linear in a cross-sectional view of the first inclined groove 5. Accordingly, the chamfered portion 15 is, for example, formed in an obtuse-angled triangular shape in a cross-sectional view.

The chamfered area of each second chamfered portion 14 continuously increases from the first middle position 10 to the inner end 5i. Accordingly, the cornering performance can be further improved. The chamfered area is not less than 0.5 mm², and preferably 0.5 to 2.0 mm². However, the chamfered area is not limited thereto.

Although the configurations of the above-described chamfered portion 15 are described about the second chamfered portion 14, the same may be applied to the first chamfered portion 13. In the present embodiment, the first chamfered portion 13 and the second chamfered portion 14 have substantially the same configurations.

As shown in FIG. 2, in the present embodiment, in an outer region 5B on the first tread end T1 side with respect to the first middle position 10 of each of the plurality of first inclined grooves 5, no chamfered portion is formed on the second groove wall 12. Accordingly, the noise performance can be assuredly maintained.

Each first land portion 7 is provided with neither grooves nor sipes in a range from the tire equator C to the first tread end T1, and is formed as a smooth tread surface. Such a first land portion 7 can exhibit excellent traction performance and braking performance.

Each first land portion 7 is provided with a lateral narrow groove 25 extending in the tire axial direction, on the outer side of the first tread end T1 in the tire axial direction. Such a lateral narrow groove 25 serves to enhance wet performance and anti-wandering performance.

As shown in FIG. 1, the tread portion 2 of the present embodiment is provided with a plurality of lateral grooves 30 each extending from the first inclined groove 5 to the second inclined groove 6. The lateral grooves 30 include first lateral grooves 31 inclined relative to the tire axial direction and second lateral grooves 32 inclined, relative to the tire axial direction, in a direction opposite to that of the first lateral grooves 31. The first lateral grooves 31 and the second lateral grooves 32 are alternated in the tire circumferential direction. Such first lateral grooves 31 and second lateral grooves 32 serve to enhance wet performance.

Although the tire according to the embodiment of the present invention has been described above in detail, the present invention is not limited to the above-described specific embodiment, and various modifications can be made to implement the present invention.

## Claims

1. A tire (1) comprising a tread portion (2) having a designated rotation direction (R), wherein
the tread portion (2) includes:
a first tread end (T1);
a first middle position (10) that is a center position between the first tread end (T1) and a tire equator (C) in a tire axial direction; and
a plurality of first inclined grooves (5) extending at least from the first tread end (T1) toward the tire equator (C) so as to be inclined to a leading edge side in the rotation direction (R),
an inner end (5i) of each of the plurality of first inclined grooves (5) in the tire axial direction is located on the tire equator (C) side with respect to the first middle position (10),
in each of the plurality of first inclined grooves (5), an angle (θ2) relative to a tire circumferential direction at the inner end (5i) is smaller than an angle (θ1) relative to the tire circumferential direction at the first middle position (10),
each of the plurality of first inclined grooves (5) includes a first groove wall (11) on the leading edge side in the rotation direction (R) and a second groove wall (12) on a trailing edge side in the rotation direction (R),
in an inner region (5A) on the inner end (5i) side with respect to the first middle position (10) of each of the plurality of first inclined grooves (5), the second groove wall (12) includes a chamfered portion (15), wherein the chamfered portion (15) of the second groove wall (12) is provided in the inner region (5A) over an entire length of the inner region (5A), **characterized in that**
in a cross-section orthogonal to a groove center line of the first inclined groove (5), a chamfered area of the chamfered portion (15) increases toward the inner end (5i) side, wherein the chamfered area of the chamfered portion (15) of the second groove wall (12) continuously increases from the first middle position (10) to the inner end (5i), and
wherein the chamfered area is determined according to the description.

2. The tire (1) according to claim 1, wherein, in an outer region (5B) on the first tread end (T1) side with respect to the first middle position (10) of each of the plurality of first inclined grooves (5), no chamfered portion is formed on the second groove wall (12).

3. The tire (1) according to claim 1 or 2, wherein an angle of each first inclined groove (5) relative to the tire circumferential direction continuously increases from the inner end (5i) to the first tread end (T1).

4. The tire (1) according to any one of claims 1 to 3, wherein the chamfered area is not less than 0.5 mm².

## Patentansprüche

1. Reifen (1), umfassend einen Laufflächenabschnitt (2) mit einer bestimmten Drehrichtung (R), wobei
der Laufflächenabschnitt (2) umfasst:
ein erstes Laufflächenende (T1);
eine erste Mittelposition (10), die eine Mittelposition zwischen dem ersten Laufflächenende (T1) und einem Reifenäquator (C) in einer Reifenaxialrichtung ist; und
eine Vielzahl von ersten geneigten Rillen (5), die sich zumindest von dem ersten Laufflächenende (T1) zu dem Reifenäquator (C) erstrecken, so dass sie zu einer Vorderkantenseite in der Drehrichtung (R) geneigt sind,
ein inneres Ende (5i) von jeder der Vielzahl von ersten geneigten Rillen (5) in der Reifenaxialrichtung auf der Seite des Reifenäquators (C) in Bezug auf die erste Mittelposition (10) angeordnet ist,
in jeder der Vielzahl von ersten geneigten Rillen (5) ein Winkel (θ2) relativ zu einer Reifenumfangsrichtung an dem inneren Ende (5i) kleiner ist als ein Winkel (θ1) relativ zu der Reifenumfangsrichtung an der ersten Mittelposition (10),
jede der Vielzahl von ersten geneigten Rillen (5) eine erste Rillenwand (11) auf der Vorderkantenseite in der Drehrichtung (R) und eine zweite Rillenwand (12) auf einer Hinterkantenseite in der Drehrichtung (R) umfasst,
in einem inneren Bereich (5A) auf der Seite des inneren Endes (5i) in Bezug auf die erste Mittelposition (10) von jeder der Vielzahl von ersten geneigten Rillen (5) die zweite Rillenwand (12) einen abgeschrägten Abschnitt (15) umfasst, wobei der abgeschrägte Abschnitt (15) der zweiten Rillenwand (12) in dem inneren Bereich (5A) über eine gesamte Länge des inneren Bereichs (5A) vorgesehen ist,
**dadurch gekennzeichnet, dass**
in einem Querschnitt orthogonal zu einer Rillenmittellinie der ersten geneigten Rille (5) eine abgeschrägte Fläche des abgeschrägten Abschnitts (15) in Richtung der Seite des inneren Endes (5i) zunimmt, wobei die abgeschrägte Fläche des abgeschrägten Abschnitts (15) der zweiten Rillenwand (12) kontinuierlich von der ersten Mittelposition (10) zu dem inneren Ende (5i) zunimmt, und
wobei die abgeschrägte Fläche gemäß der Beschreibung bestimmt wird.

2. Reifen (1) nach Anspruch 1, wobei in einem äußeren Bereich (5B) auf der Seite des ersten Laufflächenendes (T1) in Bezug auf die erste Mittelposition (10) von jeder der Vielzahl von ersten geneigten Rillen (5) kein abgeschrägter Abschnitt auf der zweiten Rillenwand (12) ausgebildet ist.

3. Reifen (1) nach Anspruch 1 oder 2, wobei ein Winkel jeder ersten geneigten Rille (5) relativ zu der Reifenumfangsrichtung kontinuierlich von dem inneren Ende (5i) zu dem ersten Laufflächenende (T1) zunimmt.

4. Reifen (1) nach einem der Ansprüche 1 bis 3, wobei die abgeschrägte Fläche nicht weniger als 0,5 mm² beträgt.

## Revendications

1. Pneumatique (1) comprenant une portion formant bande de roulement (2) ayant une direction de rotation par conception (R), dans lequel la portion formant bande de roulement (2) inclut :
une première extrémité de bande de roulement (T1) ;
une première position médiane (10) qui est une position centrale entre la première extrémité de bande de roulement (T1) et un équateur de pneumatique (C) dans une direction axiale du pneumatique ; et
une pluralité de premières rainures inclinées (5) s'étendant au moins depuis la première extrémité de bande de roulement (T1) vers l'équateur de pneumatique (C) de manière à être inclinées vers un côté de bord d'attaque dans la direction de rotation (R),
une extrémité intérieure (5i) de chacune de la pluralité de premières rainures inclinées (5) dans la direction axiale du pneumatique est située sur le côté de l'équateur de pneumatique (C) par rapport à la première position médiane (10),
dans chacune de la pluralité de premières rainures inclinées (5), un angle (θ2) relativement à une direction circonférentielle du pneumatique au niveau de l'extrémité intérieure (5i) est plus petit qu'un angle (θ1) relativement à la direction circonférentielle du pneumatique au niveau de la première position médiane (10),
chacune de la pluralité de premières rainures inclinées (5) inclut une première paroi de rainure (11) sur le côté de bord d'attaque dans la direction de rotation (R) et une seconde paroi de rainure (12) sur un côté de bord de fuite dans la direction de rotation (R),
dans une région intérieure (5A) sur le côté d'extrémité intérieure (5i) par rapport à la première position médiane (10) de chacune de la pluralité de premières rainures inclinées (5), la seconde paroi de rainure (12) inclut une portion chanfreinée (15), la portion chanfreinée (15) de la seconde paroi de rainure (12) étant prévue dans la région intérieure (5A) sur une longueur entière de la région intérieure (5A),
**caractérisé en ce que**
dans une section transversale orthogonale à une ligne centrale de rainure de la première rainure inclinée (5), une zone chanfreinée de la portion chanfreinée (15) augmente vers le côté d'extrémité intérieure (5i), la zone chanfreinée de la portion chanfreinée (15) de la seconde paroi de rainure (12) augmentant en continu depuis la première position médiane (10) jusqu'à l'extrémité intérieure (5i), et
dans lequel la zone chanfreinée déterminée en accord avec la description.

2. Pneumatique (1) selon la revendication 1, dans lequel, dans une région extérieure (5B) sur le côté de la première extrémité de bande de roulement (T1) par rapport à la première position médiane (10) de chacune de la pluralité de premières rainures inclinées (5), aucune portion chanfreinée n'est formée sur la seconde paroi de rainure (12).

3. Pneumatique (1) selon la revendication 1 ou 2, dans lequel un angle de chaque première rainure inclinée (5) relativement à la direction circonférentielle du pneumatique augmente en continu depuis l'extrémité intérieure (5i) jusqu'à la première extrémité de bande de roulement (T1).

4. Pneumatique (1) selon l'une quelconque des revendications 1 à 3, dans lequel la zone chanfreinée n'est pas inférieure à 0,5 mm².
